# EUROPEAN PATENT SPECIFICATION

(11) **EP 3 431 274 B1**
(45) Date of publication and mention of the grant of the patent: **12.02.2020**
(21) Application number: 17785809.9
(22) Date of filing: 06.04.2017
(51) Int. Cl.: B29C 43/36, B29C 43/52, B29C 65/14, B29C 35/08, B29C 70/40, B29C 33/34, B29C 33/40, B29C 33/38, B29K 305/00, B29C 43/04, B29K 307/04, B29K 105/08, B29K 101/10, B29K 709/02, B29K 671/00, B29L 9/00, B29K 701/10

(54) **COMPOSITE MATERIAL FORMING DEVICE AND COMPOSITE MATERIAL FORMING METHOD**
FORMUNGSVORRICHTUNG FÜR VERBUNDWERKSTOFF UND FORMUNGSVERFAHREN FÜR VERBUNDWERKSTOFF
DISPOSITIF DE FORMAGE DE MATÉRIAU COMPOSITE ET PROCÉDÉ DE FORMAGE DE MATÉRIAU COMPOSITE

(30) Priority: 21.04.2016 JP 2016085261
(43) Date of publication of application: 23.01.2019
(73) Proprietor: Mitsubishi Heavy Industries, Ltd., Tokyo 108-8215 (JP)
(72) Inventor: KAMIHARA, Nobuyuki, Tokyo 108-8215 (JP); ABE, Toshio, Tokyo 108-8215 (JP)
(74) Representative: Henkel & Partner mbB
(86) International application number: PCT/JP2017/014308
(87) International publication number: WO 2017/183467

(56) References cited:
- JP-A- 2013 054 830
- JP-A- 2013 115 049
- JP-A- 2016 508 085
- US-A- 5 410 132
- US-A1- 2012 018 089
- US-A1- 2014 190 629
- US-A1- 2015 231 805

## Description

### Technical Field

The present invention relates to a composite material forming device and a composite material forming method.

### Background Art

As materials that are lightweight and exhibit high strength, composite materials in which reinforcing fibers have been impregnated with a thermosetting resin are known. Composite materials are used in aircraft, automobiles, marine vessels and the like. As a method for producing a composite material, a method of laminating a sheet of reinforcing fibers and a sheet of a thermosetting resin, and then applying a magnetic field to the laminated sheet and heating is known (see JP 2014-034162 A).

US 2012/0018089 A1 discloses a molding device that may be used to produce a part made from a composite material. The molding device includes an inductive flexible membrane and an electrically conductive rigid portion. The inductive flexible membrane generates a magnetic field which creates eddy currents in the rigid portion, thereby creating a heat flow. This heat flow heats the part made from composite material by means of conduction.

US 2015/0231805 A1 discloses a consolidation device comprising a heating unit provided with at least one two-sided inductor, two walls of which are distributed on both sides of a support on which the preform is positioned, comprising carbon fibers and particles of ferromagnetic material. The two-sided inductor is capable of generating a uniform magnetic field, in order to achieve induction heating of the preform.

US 5 410 132 A discloses an apparatus and a method for superplastic forming. A workpiece is held between a pair of dies that are electrically and thermally nonconductive, and is heated inductively by a coil embedded within the dies.

US 2014/0190629 A1 discloses an induction heating compaction system for making composite products. The system includes an induction heating system and a compaction member configured to generate an electromagnetic field that causes fibers and a matrix of a pre-preg material to heat up.

### Summary of Invention

### Problem to be Solved by the Invention

With the method of JP 2014-034162 A, gas that is generated internally when a thermosetting resin is heated cannot be removed from inside a laminated sheet. Gas that cannot be removed from inside the laminated sheet decreases the strength of the thermosetting resin. Therefore, a problem with the method of JP 2014-034162 A is that producing a composite material with high strength is difficult.

To remove gas that is generated inside a thermoplastic resin, a method of producing a composite material using an autoclave is known. With this method, a prepreg of a composite material is used, and steps of laminating, debulking, and bagging, which are preparation steps in a method for producing a composite material, needs to be implemented. The laminating step is a step of laminating the prepreg of the composite material. The debulking step is a step of drawing out air from every several sheets of the composite material prepreg. The bagging step is a step of accommodating, inside a bagging film, the prepreg of the composite material from which air has been drawn out, and forming a vacuum state inside the bagging film. Therefore, this method involves numerous steps, and the time required for each step is long, and therefore the method is inefficient, which is a problem.

The present invention was developed in light of the above-described problems, and an object of the present invention is to provide a composite material forming device and a composite material forming method for efficiently forming a composite material while suitably removing gas generated inside a thermosetting resin.

### Solution to Problem

To solve the above-described problems and achieve the object of the present invention, the composite material forming device includes the features of claim 1 and the composite material forming method includes the features of claim 7, the composite material forming method comprising a pressurizing unit which includes a first member and a second member which are transparent with respect to a magnetic field, and sandwiches and pressurizes, between the first member and the second member, a predetermined region of a composite material in which reinforcing fibers have been impregnated with a thermosetting resin; and a heating unit which applies a magnetic field to the predetermined region of the composite material that has been pressurized by the pressurizing unit to heat the predetermined region of the composite material.

According to this configuration, the composite material can be heated while being pressurized in the atmosphere, and therefore the composite material can be efficiently formed while suitably removing gas generated inside the thermosetting resin. According to this configuration, the process of producing the composite material does not require passage through the preparation steps of laminating, debulking, and bagging, and therefore the composite material can be formed with good efficiency.

According to the invention, the configuration of the composite material forming device further includes a movement mechanism which synchronously moves, with respect to the composite material, a pressurization region to be pressurized by the pressurizing unit and a heating region to be heated by the heating unit by synchronously changing the position of the first member or second member relative to the composite material, and the position of the heating unit relative to the composite material. According to this configuration, the composite material can be efficiently formed while suitably removing gas generated inside the thermosetting resin regardless of the size and shape of the composite material.

According to the invention, with respect to the configuration of the composite material forming device having the movement mechanism, the movement mechanism moves the pressurization region and the heating region from a central region of the composite material to an outer peripheral region. According to this configuration, gas generated inside the thermosetting resin can be suitably removed.

With respect to the configuration of the composite material forming device having the movement mechanism, the movement mechanism may move the first member or the second member, and the heating unit with respect to the composite material. Alternatively, with respect to the configuration having the movement mechanism, the movement mechanism may move the composite material with respect to the first member or the second member, and the heating unit. According to this configuration, the composite material can be efficiently formed according to the size and shape of the composite material while suitably removing gas generated inside the thermosetting resin.

With respect to these configurations of the composite material forming device, preferably the first member or the second member has a taper from a central region of a surface facing the composite material to the outer peripheral region. According to this configuration, gas generated inside the thermosetting resin can be suitably removed.

With respect to these configurations of the composite material forming device, the heating unit preferably applies a high frequency magnetic field of 900 kHz or higher. According to this configuration, the composite material can be efficiently heated.

With respect to these configurations of the composite material forming device, the first member and the second member preferably contain at least one of a polyether ether ketone resin and a ceramic. According to this configuration, a magnetic field can be efficiently applied to the composite material while suitably removing gas generated inside the thermosetting resin.

Also, to solve the above-described problems and achieve the object of the present invention, a composite material forming method includes the features of claim 7 comprising: a pressurizing step in which a predetermined region of a composite material in which reinforcing fibers have been impregnated with a thermosetting resin is sandwiched between a first member and a second member, which are transparent with respect to a magnetic field, and pressurized; and a heating step in which a magnetic field is applied to the predetermined region of the composite material that has been pressurized in the pressurizing step, to heat the predetermined region of the composite material.

According to the invention and this configuration, the composite material can be heated while being pressurized in the atmosphere, and therefore the composite material can be efficiently formed while suitably removing gas generated inside the thermosetting resin. According to this configuration, the process of producing the composite material does not require passage through the preparation steps of laminating, debulking, and bagging, and therefore the composite material can be formed with good efficiency.

According to the invention, the configuration of the composite material forming method further includes a moving step in which a pressurization region to be pressurized in the pressurizing step and a heating region to be heated in the heating step are synchronously moved with respect to the composite material. According to this configuration, the composite material can be efficiently formed while suitably removing gas generated inside the composite material regardless of the size and shape of the composite material.

According to the invention, with respect to the configuration of the composite material forming method including the moving step, the pressurization region and the heating region are moved in the moving step from a central region of the composite material to an outer peripheral region. According to this configuration, gas generated inside the thermosetting resin can be suitably removed.

With respect to the configuration of the composite material forming method including the moving step, the first member or the second member, and a heating unit, which applies a magnetic field to the composite material, may be moved with respect the composite material in the moving step. Alternatively, in the moving step, the composite material may be moved with respect to the first member or the second member, and the heating unit that applies a magnetic field to the composite material. According to this configuration, the composite material can be efficiently formed according to the size and shape of the composite material while suitably removing gas generated inside the thermosetting resin.

With respect to these configurations of the composite material forming method, preferably the first member or the second member has a taper from a central region of a surface facing the composite material to an outer peripheral region. According to this configuration, gas generated inside the thermosetting resin can be suitably removed.

With respect to these configurations of the composite material forming method, in the heating step, a high frequency magnetic field of 900 kHz or higher is preferably applied to the predetermined region of the composite material. According to this configuration, the composite material can be efficiently heated.

With respect to these configurations of the composite material forming method, the first member and the second member preferably contain at least one of a polyether ether ketone resin and a ceramic. According to this configuration, a magnetic field can be efficiently applied to the composite material while suitably removing gas generated inside the thermosetting resin.

### Advantageous Effect of Invention

According to the present invention, a composite material forming device and a composite material forming method for efficiently forming a composite material while suitably removing gas generated inside a thermosetting resin can be provided.

### Brief Description of Drawings

FIG. 1 is a schematic configuration diagram of a composite material forming device according to a first embodiment of the present invention.
FIG. 2 is a graph showing an example of the relationship between time and temperature of a composite material when the heating unit heats the composite material.
FIG. 3 is an image illustrating an example of the temperature distribution in the composite material when the heating unit heats the composite material.
FIG. 4 is an image illustrating an example of the movement path of the pressurization region.
FIG. 5 is an image illustrating an example of the movement path of the heating region.
FIG. 6 is a flowchart of the composite material forming method according to the first embodiment of the present invention.
FIG. 7 is a schematic configuration diagram of a composite material forming device according to a second embodiment of the present invention.
FIG. 8 is a schematic configuration diagram of a composite material forming device according to a third embodiment of the present invention.
FIG. 9 is an image of a first member viewed from the composite material side, of the composite material forming device according to the third embodiment of the present invention.
FIG. 10 is a schematic configuration diagram of a composite material forming device according to a fourth embodiment of the present invention.
FIG. 11 is an image of the first member viewed from the composite material side, of the composite material forming device according to the fourth embodiment of the present invention.
FIG. 12 is a schematic configuration diagram of a composite material forming device according to a fifth embodiment of the present invention.
FIG. 13 is a schematic configuration diagram illustrating an example of a case in which the pressurization region and the heating region have been moved in the composite material forming device according to the fifth embodiment of the present invention.

### Description of Embodiments

Detailed descriptions will be given below of embodiments according to the present invention on the basis of the drawings. Note that the present invention is not limited by these embodiments. In addition, the constituent elements in the embodiments described below include those that can be easily substituted by a person skilled in the art or those that are substantially the same. The various constituent elements described hereafter may also be combined, as appropriate.

### First Embodiment

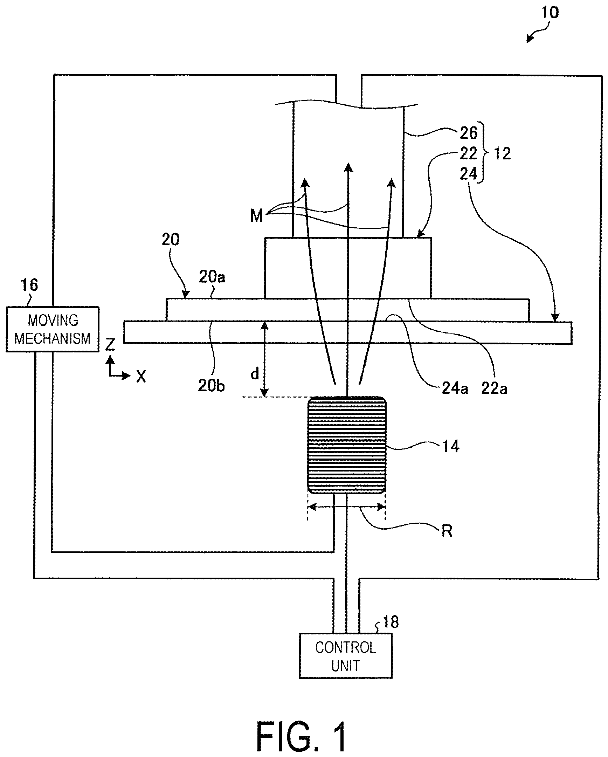

FIG. 1 is a schematic configuration diagram of a composite material forming device 10 according to a first embodiment of the present invention. The composite material forming device 10 illustrated in FIG. 1 includes a pressurizing unit 12, a heating unit 14, a movement mechanism 16, and a control unit 18. The composite material forming device 10 processes a composite material 20 in which reinforcing fibers are impregnated with a thermosetting resin, from a softened state or semi-cured state to a cured state while forming the composite material 20 to a predetermined size and a predetermined shape.

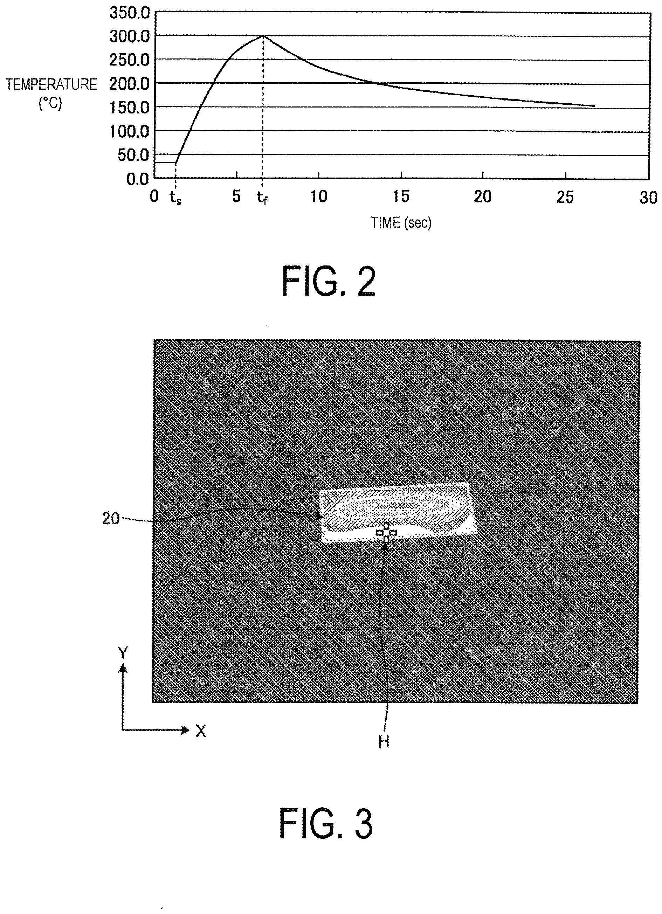

In the first embodiment, the composite material 20 is disposed and formed in the composite material forming device 10 in a plate shape extending along a horizontal plane, which is orthogonal to a direction along the Z-direction in FIG. 1, which is a vertical direction, and includes the X-direction of FIG. 1, which is a first horizontal direction, and the Y-direction illustrated in FIG. 3 to FIG. 5. More specifically, the composite material 20 is disposed and formed so that the below-described reinforcing fibers extend along a horizontal plane including the X-direction of FIG. 1 and the Y-direction illustrated in FIG. 3 to FIG. 5. In the first embodiment, the composite material 20 has an upper surface 20a and a lower surface 20b. In the composite material forming device 10, the upper surface 20a is oriented in the +Z-direction of FIG. 1, which is upward vertical direction. In the composite material forming device 10, the lower surface 20b is oriented in the -Z-direction of FIG. 1, which is downward vertical direction. In the present invention, the composite material 20 is not limited to a plate shape, and as described with respect to embodiments hereinafter, the composite material 20 may be a complex shape having curves.

The reinforcing fibers contained in the composite material 20 are electrically conductive, and therefore react with a magnetic field to produce an eddy current internally. By generating an eddy current internally, the reinforcing fibers contained in the composite material 20 release heat due to the electrical resistance of the reinforcing fibers themselves. The heat generated by the reinforcing fibers contained in the composite material 20 is transmitted to the thermosetting resin contained in the composite material 20. That is, the composite material 20 reacts with a magnetic field and releases heat. The reinforcing fibers contained in the composite material 20 extend along a horizontal plane including the X-direction of FIG. 1 and the Y-direction illustrated in FIG. 3 to FIG. 5. The composite material 20 is lightweight and exhibits high strength. In the first embodiment, the reinforcing fibers contained in the composite material 20 are exemplified as being carbon fibers, but the reinforcing fibers are not limited thereto, and may be other metal fibers. In the first embodiment, the thermosetting resin contained in the composite material 20 is exemplified as a resin having an epoxy resin. When the thermosetting resin contained in the composite material 20 includes an epoxy resin, the composite material 20 is more lightweight and stronger, and thus including an epoxy resin is preferable.

The pressurizing unit 12 pressurizes a predetermined region of the composite material 20. The pressurizing unit 12 includes a first member 22 and a second member 24. The first member 22 has a plane 22a in the -Z-direction. At the plane 22a, the first member 22 contacts a predetermined region of the upper surface 20a of the composite material 20, and applies pressure in the -Z-direction to the predetermined region of the composite material 20. The second member 24 is fixed and installed. The second member 24 has a plane 24a in the +Z-direction. At the plane 24a, the second member 24 contacts the entire surface of the lower surface 20b of the composite material 20, and supports the composite material 20 in the +Z-direction. In this manner, the pressurizing unit 12 sandwiches and pressurizes the predetermined region of the composite material 20 between the plane 22a of the first member 22 and the plane 24a of the second member 24. In the first embodiment, the pressurizing unit 12 sandwiches and pressurizes the predetermined region of the composite material 20 between the plane 22a of the first member 22 and the plane 24a of the second member 24, and therefore the composite material 20 is formed in a plate shape. The pressurizing unit 12 pressurizes the region of the upper surface 20a of the composite material 20 contacting the plane 22a. The region to be pressurized by the pressurizing unit 12 is hereinafter referred to as the pressurization region. The area in a direction along the horizontal plane of the pressurization region is approximately the area of the plane 22a. The pressurizing unit 12 preferably pressurizes the pressurization region of the composite material 20 within a range from 200 kPa to 800 kPa, and more preferably pressurizes within a range from 300 kPa to 600 kPa.

In the first embodiment, the pressurizing unit 12 includes a pressurizing cylinder 26. The pressurizing cylinder 26 is connected in the +Z-direction to the first member 22. The first member 22 is supported from the +Z-direction by the pressurizing cylinder 26. The first member 22 is installed in the -Z-direction from the pressurizing cylinder 26. The pressurizing cylinder 26 is electrically connected to the control unit 18. The pressurizing cylinder 26 changes the pressure that is applied by the first member 22 to the predetermined region of the composite material 20 on the basis of control by the control unit 18. The pressurizing cylinder 26 is connected to and supported by the movement mechanism 16. Through driving of the movement mechanism 16, the pressurizing cylinder 26 moves relative to the composite material 20 along with the first member 22 connected to the pressurizing cylinder 26.

The first member 22 and the second member 24 are both configured with materials which are transparent with respect to magnetic fields. That is, the first member 22 and the second member 24 are both configured with materials which do not react for the most part with a magnetic field, and do not generate an eddy current for the most part in accordance with the magnetic field. Therefore, the first member 22 and the second member 24 are both transparent with respect to magnetic fields. That is, the first member 22 and the second member 24 both do not react for the most part with a magnetic field, and do not generate an eddy current for the most part in accordance with the magnetic field. In the first embodiment, the first member 22 and the second member 24 both preferably contain at least one of ceramic resin and PEEK resin exemplified as a material that is transparent to magnetic fields. In a case in which the first member 22 and the second member 24 contain at least one of a PEEK resin and a ceramic resin, transparency with respect to magnetic fields, and also pressure resistance and heat resistance are high, and thus such a configuration is preferable.

The heating unit 14 applies a magnetic field to the predetermined region of the composite material 20 that was pressurized by the pressurizing unit 12, and heats the predetermined region of the composite material 20. The heating unit 14 processes the thermosetting resin contained in the composite material 20 into a cured state by heating the predetermined region of the composite material 20, and fixes the composite material 20 in a shape formed by the pressurizing unit 12. In the first embodiment, the heating unit 14 is exemplified as a diameter R coil that generates a magnetic field with respect to the composite material 20. With the heating unit 14, a center axis of the coil extends along a direction orthogonal to the extension direction of the composite material 20. Namely, with the heating unit 14, the center axis of the coil extends along the Z-direction. The heating unit 14 is disposed with an end part of the heating unit 14 in the +Z-direction separated by a distance d from the lower surface 20b of the composite material 20. The distance d is 1.5 cm, for example. The diameter R is 15 cm, for example.

The heating unit 14 is electrically connected to the control unit 18. The heating unit 14 is provided with electric power from the control unit 18, and generates a magnetic field on the basis of control by the control unit 18. The heating unit 14 generates a magnetic field including magnetic force lines M along the direction of the center axis, or in other words, along a direction orthogonal to a surface in which the composite material 20 extends. The heating unit 14 heats the composite material 20 by generating a magnetic field along the direction of the center axis, or in other words, by generating a magnetic field along the direction orthogonal to the surface in which the composite material 20 extends. The heating unit 14 heats a region of the composite material 20 opposed in the +Z-direction by a +Z-direction end part of the heating unit 14. The region to be heated by the heating unit 14 is hereinafter referred to as the heating region. The area in a direction along the horizontal plane of the heating region is approximately the area of a circle of a diameter R. The heating unit 14 preferably applies a high frequency magnetic field of 900 kHz or higher to the heating region of the composite material 20.

The heating unit 14 generates a magnetic field along a direction orthogonal to the direction in which the reinforcing fibers contained in the composite material 20 extend by generating a magnetic field along the direction orthogonal to the surface of extension of the composite material 20. The reinforcing fibers contained in the composite material 20 most efficiently release heat in a case in which a magnetic field is applied along a direction orthogonal to the direction of extension of the reinforcing fibers of the composite material 20. Therefore, the heating unit 14 preferably generates a magnetic field along the direction orthogonal to the direction of extension of the reinforcing fibers in the composite material 20.

The movement mechanism 16 is connected to the pressurizing cylinder 26 of the pressurizing unit 12 on the side that is opposite to the side at which the first member 22 is provided. The movement mechanism 16 is also connected to the heating unit 14 on the side that is opposite to the side facing the composite material 20. The movement mechanism 16 is electrically connected to the control unit 18. Examples of the movement mechanism 16 include a robot arm and a guide rail type drive device, but the present invention is not limited thereto, and a well-known drive device which grips in a manner capable of moving along a horizontal plane can be applied. The movement mechanism 16 moves the first member 22 along a direction of a horizontal plane through the pressurizing cylinder 26 based on control by the control unit 18. Through this, the movement mechanism 16 changes the position of the first member 22 relative to the composite material 20. By changing the position of the first member 22 relative to the composite material 20, the movement mechanism 16 moves the pressurization region. The movement mechanism 16 moves the heating unit 14 along the direction of the horizontal plane through control by the control unit 18. Through this, the movement mechanism 16 changes the position of the heating unit 14 relative to the composite material 20. The movement mechanism 16 moves the heating region by changing the position of the heating unit 14 relative to the composite material 20.

Through control by the control unit 18, the movement mechanism 16 synchronously changes the position of the first member 22 relative to the composite material 20, and the position of the heating unit 14 relative to the composite material 20. The movement mechanism 16 synchronously moves the pressurization region and the heating region by synchronously changing the position of the first member 22 relative to the composite material 20, and the position of the heating unit 14 relative to the composite material 20.

The control unit 18 is electrically connected to the pressurizing cylinder 26 of the pressurizing unit 12. The control unit 18 is electrically connected to the heating unit 14. The control unit 18 is electrically connected to the movement mechanism 16. The control unit 18 controls the pressurizing unit 12 by controlling the pressurizing cylinder 26. The control unit 18 controls the pressure that the pressurizing unit 12 applies to the pressurization region by controlling the pressurizing unit 12. The control unit 18 controls the heating unit 14. The control unit 18 controls the magnetic field applied to the heating region by controlling the heating unit 14. The control unit 18 controls the movement mechanism 16. The control unit 18 controls the movement mechanism 16 to thereby control the path in the pressurization region by the pressurizing unit 12 and the path in the heating region by the heating unit 14. The control unit 18 can synchronize the path of the heating region and the path of the pressurization region by controlling the movement mechanism 16. The control unit 18 can determine at any time whether all regions of the composite material 20 scheduled to be pressurized and heated have been pressurized and heated.

The control unit 18 includes a storage unit and a processing unit. The storage unit includes a storage device such as RAM, ROM and flash memory, for example, and stores a software program to be processed by the processing unit, data to be referenced by the software program, and the like. In addition, the storage unit also functions as a storage region for temporarily storing processing results, and the like from the processing unit. The processing unit reads and processes the software program and the like from the storage unit, and thereby exhibits functions according to the details of the software program.

FIG. 2 is a graph showing an example of the relationship between time and the temperature of the composite material 20 when the heating unit 14 heats the composite material 20. As shown in FIG. 2, the heating unit 14 can raise the temperature of the composite material 20 from around 30°C to around 300°C in several seconds from a heating start time tₛ to a heating end time t_{f}. The heating unit 14 can respectively change the heating temperature, the rate of temperature increase, and the heating time of the composite material 20 according to a specific composition of the composite material 20, for example, the composition of the thermosetting resin contained in the composite material 20.

FIG. 3 is an image showing an example of the temperature distribution in the composite material 20 when the heating unit 14 heats the composite material 20. FIG. 3 is an image showing a view of the composite material 20 from the upward vertical direction, or in other words, from the +Z-direction of FIG. 1. The X-direction of FIG. 3 is the same as that of FIG. 1. The Y-direction of FIG. 3 is a direction orthogonal to the X-direction and to the Z-direction of FIG. 1, and is included in the horizontal plane. As illustrated in FIG. 3, the temperature distribution of the composite material 20 is such that the temperature is the highest at a heating center region H, which is the center of the heating region of the heating unit 14, and the temperature decreases when separated even slightly from the heating center region H. As is understood from the temperature distribution illustrated in FIG. 3, the heating unit 14 can selectively heat in a concentrated manner a localized region that includes only the heating region of the composite material 20 and the vicinity thereof.

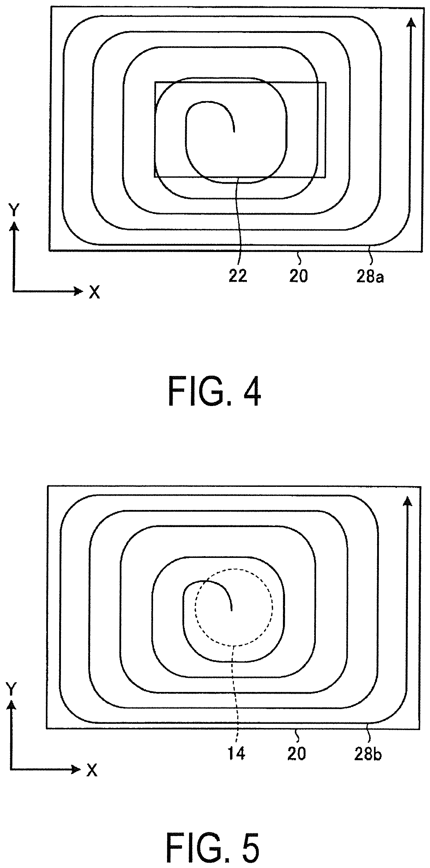

FIG. 4 is an image illustrating an example of a movement path 28a in the pressurization region. Similar to FIG. 3, FIG. 4 is an image showing a view of the composite material 20 from the upward vertical direction, or in other words, from the +Z-direction of FIG. 1. The movement path 28a connects a path from a center point of the pressurization region with a curve. The movement path 28a runs from the central region of the composite material 20 towards the outer peripheral region. More specifically, the movement path 28a runs from the center point of the composite material 20 towards the outer peripheral region in a spiral shape so that a gap is not created in the pressurization region. When viewed from the +Z-direction, the movement path 28a overlaps the connection by a curve of the path in which the movement mechanism 16 moves the center point of the plane 22a of the first member 22. The movement mechanism 16 causes the center point of the pressurization region to move from the central region of the composite material 20 to the outer peripheral region by moving the center point of the plane 22a of the first member 22 from the central region of the composite material 20 towards the outer peripheral region along the movement path 28a.

FIG. 5 is an image showing an example of the movement path 28b of the heating region. Similar to FIGS. 3 and 4, FIG. 5 is an image showing a view of the composite material 20 from the upward vertical direction, or in other words, from the +Z-direction of FIG. 1. The movement path 28b connects a path of the center point of the heating region with a curve. The movement path 28b runs from the central region of the composite material 20 towards the outer peripheral region. More specifically, the movement path 28b runs from the center point of the composite material 20 towards the outer peripheral region in a spiral shape so that a gap is not created in the heating region. When viewed from the +Z-direction, the movement path 28b overlaps the connection by a curve of the path in which the movement mechanism 16 moves the center axis of heating unit 14. The movement mechanism 16 causes the center point of the heating region to move from the central region of the composite material 20 to the outer peripheral region by moving the center axis of the heating unit 14 from the central region of the composite material 20 towards the outer peripheral region along the movement path 28b.

The movement path 28a of the pressurization region and the movement path 28b of the heating region mutually overlap when viewed from the +Z-direction. The movement mechanism 16 synchronously moves the center point of the plane 22a of the first member 22 along the movement path 28a, and the center axis of the heating unit 14 along the movement path 28b, from the central region of the composite material 20 towards the outer peripheral region. Through this, the movement mechanism 16 synchronously moves the pressurization region and the heating region from the central region of the composite material 20 to the outer peripheral region.

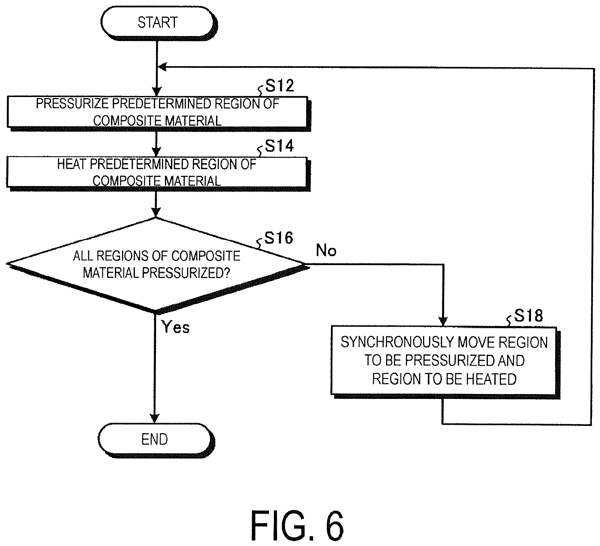

The operation of the composite material forming device 10 according to the first embodiment having a configuration like that described above is described below. FIG. 6 is a flowchart of the composite material forming method according to the first embodiment of the present invention. The composite material forming method according to the first embodiment, which is a processing method that is executed by the composite material forming device 10 according to the first embodiment, is described using FIG. 6. As illustrated in FIG. 6, the composite material forming method according to the first embodiment includes a pressurizing step S12, a heating step S14, a heating completed region confirmation step S16, and a moving step S18. Hereinafter, the pressurizing step S12, heating step S14, heating completed region confirmation step S16, and moving step S18 are respectively referred to simply as step S12, step S14, step S16, and step S18.

The composite material 20 having reinforcing fibers impregnated with a thermosetting resin is disposed in a plate shape extending along a horizontal plane, on the plane 24a of the second member 24 of the pressurizing unit 12. On the basis of control by the control unit 18, the pressurizing unit 12 causes the plane 22a of the first member 22 to contact a prescribed region of the upper surface 20a of the composite material 20, and presses the first member 22 through the pressurizing cylinder 26 to the prescribed region of the upper surface 20a of the composite material 20 to thereby pressurize the prescribed region of the composite material 20 (step S12). In the initial step S12, preferably, the pressurizing unit 12 causes the plane 22a of the first member 22 to contact the central region of the upper surface 20a of the composite material 20, and presses the first member 22 through the pressurizing cylinder 26 to the central region of the upper surface 20a of the composite material 20 to thereby pressurize the central region of the composite material 20. That is, in the initial step S12, the pressurization region to be pressurized by the pressurizing unit 12 is preferably set to the central region of the composite material 20.

On the basis of control by the control unit 18, the heating unit 14 applies a magnetic field to the pressurization region, which is the predetermined region of the composite material 20 that was pressurized by the pressurizing unit 12 in step S12, and thereby heats the pressurization region that is the predetermined region of the composite material 20 (step S14). The heating unit 14 processes the thermosetting resin contained in the pressurization region of the composite material 20 into a cured state by heating the pressurization region of the composite material 20. In step S14, the heating region heated by the heating unit 14 is fully superposed on the pressurization region and set. In the initial step S14, preferably the heating unit 14 faces the central region of the lower surface 20b of the composite material 20 in the Z-direction in synchronization with the pressurization region of the initial step S12, and thereby heats the central region of the composite material 20. That is, in the initial step S14, the heating region is preferably set to the central region of the composite material 20.

The control unit 18 determines whether all regions of the composite material 20 scheduled to be pressurized and heated have been pressurized and heated (step S16). In a case in which the control unit 18 determines that not all regions of the composite material 20 scheduled to be pressurized and heated have been pressurized and heated (No in step S16), the composite material forming device 10 advances the processing to step S18.

On the basis of control by the control unit 18, the movement mechanism 16 synchronously changes the position of the first member 22 relative to the composite material 20, and the position of the heating unit 14 relative to the composite material 20, and thereby synchronously moves the pressurization region and the heating region (step S18). More specifically, the movement mechanism 16 moves the first member 22 through the pressurizing cylinder 26 with respect to the composite material 20, and thereby moves the pressurization region. The movement mechanism 16 causes the heating region to move by moving the heating unit 14 with respect to composite material 20. The movement mechanism 16 moves the pressurization region and the heating region to a region determined by the control unit 18 to not be pressurized and heated. After step S18, the composite material forming device 10 implements the processing of steps S12 and S14 at the pressurization region and heating region moved in step S18.

The composite material forming device 10 repeats steps S18, S12, and S14 until the control unit 18 determines that all regions of the composite material 20 scheduled to be pressurized and heated have been pressurized and heated. In a case in which the control unit 18 determines that all regions of the composite material 20 scheduled to be pressurized and heated have been pressurized and heated (Yes in step S16), the composite material forming device 10 ends the processing.

As described above, the composite material forming device 10 and the composite material forming method carried out by the composite material forming device 10 can heat the composite material 20 while pressurizing it. Thus, the composite material 20 can be efficiently formed in a state in which gas is removed by heating, while suitably removing gas generated inside the thermosetting resin through pressurization.

The composite material forming device 10 and the composite material forming method carried out by the composite material forming device 10 can pressurize and heat the composite material 20 in the atmosphere. Thus, the process of producing the composite material 20 does not require passage through the preparation steps of laminating, debulking, and bagging, which were required when producing the composite material 20 using an autoclave, and therefore the composite material can be formed with good efficiency. Thus, the composite material forming device 10 and the composite material forming method carried out by the composite material forming device 10 can significantly reduce the cost and labor required to form the composite material 20.

The composite material forming device 10 and the composite material forming method carried out by the composite material forming device 10 move, through the movement mechanism 16, the pressurization region and the heating region from the central region of the composite material 20 to an outer peripheral region. Therefore, the composite material forming device 10 and the composite material forming method carried out by the composite material forming device 10 can remove the gas generated inside the thermosetting resin contained in the composite material 20 so that the gas is transmitted through the inside of the softened thermosetting resin of the composite material 20, and extruded from the central region of the composite material 20 to the outer peripheral region. That is, the composite material forming device 10 and the composite material forming method carried out by the composite material forming device 10 can more suitably remove the gas that is generated inside the thermosetting resin.

The composite material forming device 10 and the composite material forming method carried out by the composite material forming device 10 move, through the movement mechanism 16, the first member 22 of the pressurizing unit 12 and the heating unit 14 with respect to the composite material 20, and thereby move the pressurization region and the heating region. Thus, the composite material forming device 10 and the composite material forming method carried out by the composite material forming device 10 can easily set the movement paths of the pressurization region and the heating region according to the size and shape of the composite material 20. Accordingly, the composite material forming device 10 and the composite material forming method carried out by the composite material forming device 10 can efficiently form the composite material 20 according to the size and shape of the composite material 20 while suitably removing the gas that is generated inside the thermosetting resin.

Note that with the composite material forming device 10 and the composite material forming method carried out by the composite material forming device 10, the movement mechanism 16 moves the pressurization region and the heating region on the basis of control by the control unit 18, but the present invention is not limited thereto. The composite material forming device 10 and the composite material forming method carried out by the composite material forming device 10 may also move the pressurization region and the heating region by manually controlling the movement mechanism 16.

The composite material forming device 10 and the composite material forming method carried out by the composite material forming device 10 move, through the movement mechanism 16, the first member 22 of the pressurizing unit 12 to thereby move the pressurization region, but are not limited thereto. The composite material forming device 10 and the composite material forming method carried out by the composite material forming device 10 may also move, through the movement mechanism 16, the second member 24 according to the size, shape, and arrangement position of the first member 22 and the second member 24 to thereby move the pressurization region, and may move the pressurization region by moving the first member and the second member.

The composite material forming device 10 and the composite material forming method carried out by the composite material forming device 10 apply a high frequency magnetic field of 900 kHz or higher to the composite material 20 by the heating unit 14. Therefore, the composite material forming device 10 and the composite material forming method carried out by the composite material forming device 10 can efficiently heat the composite material 20.

With the composite material forming device 10 and the composite material forming method carried out by the composite material forming device 10, the first member 22 and the second member 24 contain at least one of a polyether ether ketone resin and a ceramic. Accordingly, the composite material forming device 10 and the composite material forming method carried out by the composite material forming device 10 sandwich and pressurize the composite material 20 between the first member 22 and the second member 24, which are transparent with respect to magnetic fields and have high pressure resistance and heat resistance, and therefore a magnetic field can be efficiently applied to the composite material 20 while suitably removing the gas that is generated inside the thermosetting resin.

Note that with the composite material forming device 10 and the composite material forming method carried out by the composite material forming device 10, the pressurizing cylinder 26 is included in the pressurizing unit 12, but the present invention is not limited thereto. The composite material forming device 10 and the composite material forming method carried out by the composite material forming device 10 may be such that the pressurizing unit 12 does not include a pressurizing cylinder 26, and the composite material 20 is pressurized by the weight of the first member 22 itself.

### Second Embodiment

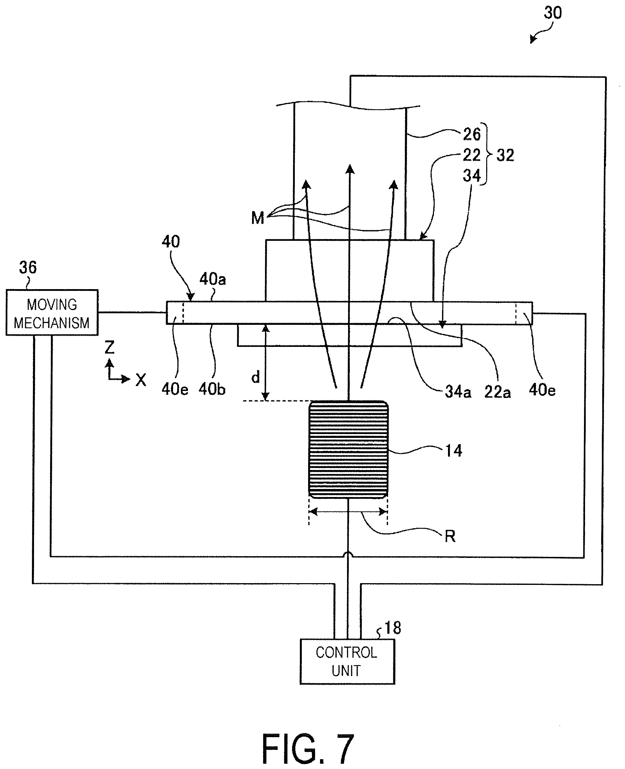

FIG. 7 is a schematic configuration diagram of a composite material forming device 30 according to a second embodiment of the present invention. The composite material forming device 30 differs from the composite material forming device 10 in that the pressurizing unit 12 is changed to a pressurizing unit 32, and the movement mechanism 16 is changed to a movement mechanism 36. In the composite material forming device 30, the same group of reference signs as that of the first embodiment is used for constituent elements which are the same as those of the first embodiment, and detailed descriptions thereof are omitted.

As illustrated in FIG. 7, the pressurizing unit 32 differs in that the second member 24 of the pressurizing unit 12 is changed to a second member 34. The second member 34 basically has the same configuration and properties as those of the second member 24, but differs from the second member 24 in that the second member 34 does not extend in a direction along the horizontal plane further than a composite material 40, and contacts only a portion of a lower surface 40b of the composite material 40 to be processed by the composite material forming device 30. The second member 34 has a plane 34a in the +Z-direction. At the plane 34a, the second member 34 contacts a portion of the lower surface 40b of the composite material 40, and supports a portion of the composite material 40 in the +Z-direction. At the plane 22a, the first member 22 contacts a predetermined region of the upper surface 40a of the composite material 40, and applies pressure in the -Z-direction to the predetermined region of the composite material 40. The pressurizing unit 32 sandwiches and pressurizes the predetermined region of the composite material 40 between the plane 22a of the first member 22 and the plane 34a of the second member 34. The pressurizing unit 32 pressurizes the region of the upper surface 40a of the composite material 40 contacting the plane 22a. The area in a direction along the horizontal plane of the pressurization region, which is a region to be pressurized by the pressurizing unit 32, is approximately the area of the plane 22a.

The first member 22 and the pressurizing cylinder 26 included in the pressurizing unit 32 are not connected to the movement mechanism 36, and thereby differ from the fist member 22 and the pressurizing cylinder 26 included in the pressurizing unit 12 connected to the movement mechanism 16 in the first embodiment. The first member 22, the pressurizing cylinder 26, and the second member 34 included in the pressurizing unit 32 are all fixed and installed. The pressurizing unit 32 sandwiches and pressurizes the predetermined region of the composite material 40 between the plane 22a of the first member 22 and the plane 34a of the second member 34.

The heating unit 14 is not connected to the movement mechanism 36, and thereby differs from the heating unit 14 that is connected to the movement mechanism 16 in the first embodiment. In the second embodiment, the heating unit 14 is fixed and installed. The first member 22 and the second member 34 of the pressurizing unit 32, and the heating unit 14 are installed opposing the Z-direction.

The movement mechanism 36 supports an end part 40e of the composite material 40. The movement mechanism 36 moves the composite material 40 along the direction of the horizontal plane. That is, the movement mechanism 36 moves the composite material 40 with respect to the first member 22 and the second member 34 included in the pressurizing unit 32, and the heating unit 14. Through this, the movement mechanism 36 synchronously changes the position of the first member 22 and the second member 34 relative to the composite material 40, and the position of the heating unit 14 relative to the composite material 40. In this manner, the movement mechanism 36 causes the composite material 40 to move, and thereby synchronously moves the pressurization region and the heating region. On the basis of control by the control unit 18, the movement mechanism 36 changes the pressurization region and the heating region in the same path as that of the movement mechanism 16.

The composite material forming device 30 processes the composite material 40, in place of the composite material 20, from a softened state or semi-cured state to a cured state while forming to a predetermined size and a predetermined shape. The composite material 40 basically has the same configuration and properties as those of the composite material 20, but differs from the composite material 20 in that the composite material 40 has an end part 40e that is supported by the movement mechanism 36. The end part 40e is a portion that is not pressurized or heated by the composite material forming device 30.

The operation of the composite material forming device 30 according to the second embodiment having a configuration like that described above is described below. The processing method executed by the composite material forming device 30 differs from the processing method executed by the composite material forming device 10 in that the moving step S18 is partially changed.

In the moving step according to the second embodiment, the movement mechanism 36 moves the pressurization region by moving the composite material 40 with respect to the first member 22 and the second member 34 on the basis of control by the control unit 18. The movement mechanism 36 moves the heating region by moving the composite material 40 with respect to the heating unit 14. On all other points, the moving step according to the second embodiment is the same as the moving step S18 according to the first embodiment.

As described above, the composite material forming device 30 and the composite material forming method carried out by the composite material forming device 30 can heat the composite material 40 while pressurizing it without moving the pressurizing unit 32 and the heating unit 14, and therefore gas generated inside the thermosetting resin by pressurization can be suitably removed, and the composite material 40 can be efficiently formed in a state in which gas is removed by heating according to the size and shape of the composite material 40. For a case in which the composite material 40 is large, the composite material forming device 30 and the composite material forming method carried out by the composite material forming device 30 are particularly preferable because the composite material 40 can be formed even when the size of the second member 34 in the horizontal direction is smaller than that of the composite material 40.

### Third Embodiment

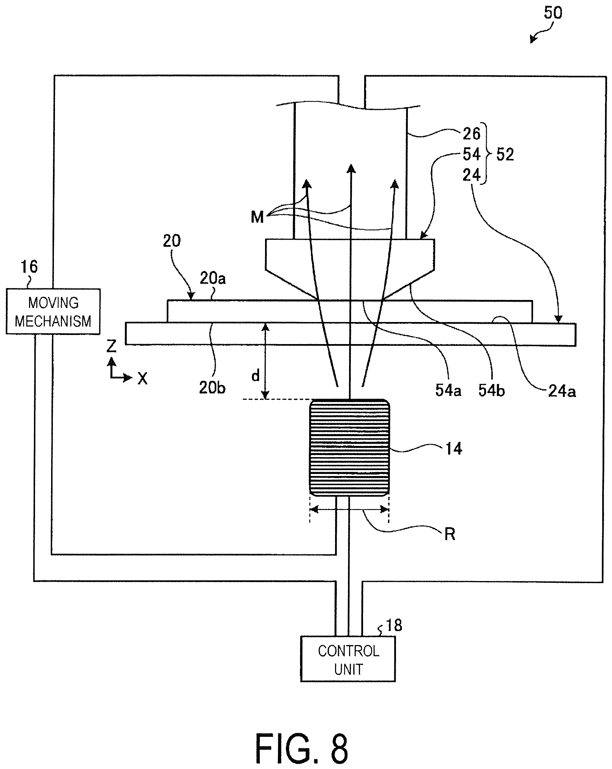

FIG. 8 is a schematic configuration diagram of a composite material forming device 50 according to a third embodiment of the present invention. The composite material forming device 50 differs from the composite material forming device 10 in that the pressurizing unit 12 is changed to a pressurizing unit 52. In the composite material forming device 50, the same group of reference signs as that of the first embodiment is used for constituent elements which are the same as those of the first embodiment, and detailed descriptions thereof are omitted.

As illustrated in FIG. 8, the pressurizing unit 52 differs in that the first member 22 of the pressurizing unit 12 is changed to a first member 54. The first member 54 is connected to the movement mechanism 16 through the pressurizing cylinder 26, and moves along with the pressurizing cylinder 26 through driving of the movement mechanism 16. The movement mechanism of the first member 54 is the same as the movement mechanism of the fist member 22. The first member 54 has, at a surface in a direction opposing the upper surface 20a of the composite material 20, in other words, the -Z direction surface, a flat section 54a that contacts the upper surface 20a of the composite material 20, and a taper 54b that is separated from the upper surface 20a of the composite material 20.

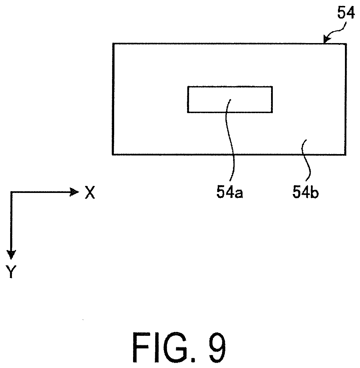

FIG. 9 is an image of the first member 54 viewed from the composite material 20 side, of the composite material forming device 50 according to the third embodiment of the present invention. As illustrated in FIG. 9, the flat section 54a is provided at a central region of the -Z-direction surface of the first member 54. The taper 54b is provided from the central region of the -Z-direction surface of the first member 54 to the outer peripheral region. The pressurizing unit 52 sandwiches and pressurizes the predetermined region of the composite material 20 between the flat section 54a of the first member 54 and the plane 24a of the second member 24. The pressurizing unit 52 pressurizes the region of the upper surface 20a of the composite material 20 contacting the flat section 54a. At the pressurizing unit 52, the area in a direction along the horizontal plane of the pressurization region is approximately the area of the flat section 54a.

Because the taper 54b exists, the composite material forming device 50 and the composite material forming method carried out by the composite material forming device 50 can impart a pressurization gradient by the taper 54b in the vicinity of the pressurization region of the composite material 20 that is contacted and pressurized by the flat section 54a. Through this, the composite material forming device 50 and the composite material forming method carried out by the composite material forming device 50 can use the pressurization gradient imparted by the taper 54b to more suitably remove the gas that is generated inside the thermosetting resin from the central region to the outer peripheral region. Note that in the third embodiment, the first member 54 has a taper 54b from the central region of the surface opposing the composite material 20 to the outer peripheral region, but the second member 24 may also have a similar taper, or both the first member 54 and the second member 24 may have similar tapers.

### Fourth Embodiment

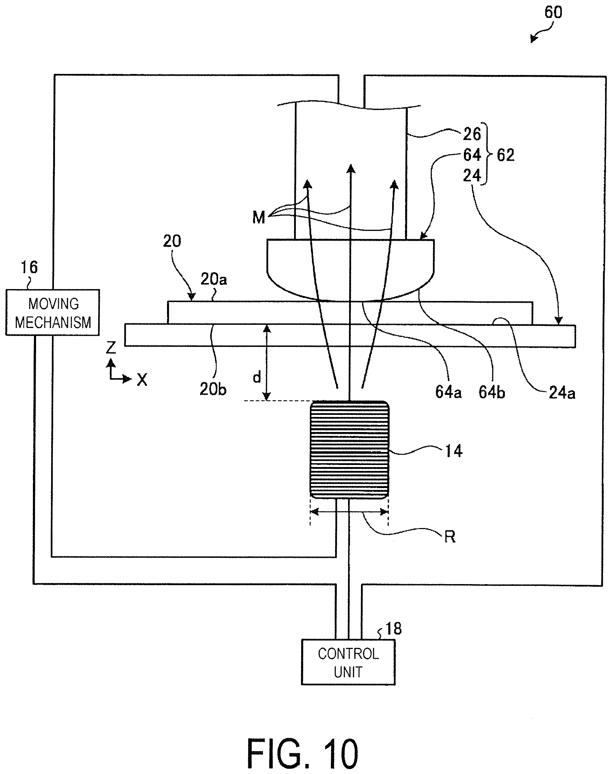

FIG. 10 is a schematic configuration diagram of a composite material forming device 60 according to a fourth embodiment of the present invention. The composite material forming device 60 differs from the composite material forming device 10 in that the pressurizing unit 12 is changed to a pressurizing unit 62. In the composite material forming device 60, the same group of reference signs as that of the first embodiment is used for constituent elements which are the same as those of the first embodiment, and detailed descriptions thereof are omitted.

As illustrated in FIG. 10, the pressurizing unit 62 differs in that the first member 22 of the pressurizing unit 12 is changed to a first member 64. The first member 64 is connected to the movement mechanism 16 through the pressurizing cylinder 26, and moves along with the pressurizing cylinder 26 through driving of the movement mechanism 16. The movement mechanism of the first member 64 is the same as the movement mechanism of the fist member 22. The first member 64 has, at a surface in a direction opposing the upper surface 20a of the composite material 20, in other words, the -Z direction surface, a contact section 64a that contacts the upper surface 20a of the composite material 20, and a non-contact section 64b that is separated from the upper surface 20a of the composite material 20.

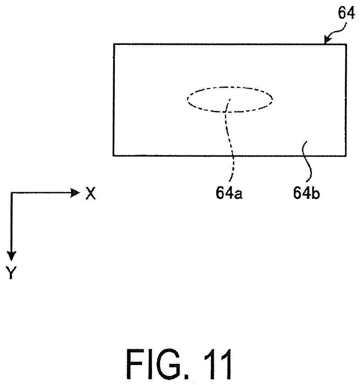

FIG. 11 is an image of the first member 64 of the composite material forming device 60 according to the fourth embodiment of the present invention, viewed from the composite material 20 side. As illustrated in FIG. 11, the contact section 64a is provided at a central region of the -Z-direction surface of the first member 64. The non-contact section 64b is provided from the central region of the -Z-direction surface of the first member 64 to the outer peripheral region. The -Z-direction surface of the first member 64 is a surface at which the contact section 64a and the non-contact section 64b are connected in a gently sloping manner, and a taper is formed over the entire surface from the central region to the outer peripheral region. The -Z-direction surface of the first member 64 is exemplified by a spherical surface or an elliptical spherical surface. The pressurizing unit 62 sandwiches and pressurizes the predetermined region of the composite material 20 between the contact section 64a of the first member 64 and the plane 24a of the second member 24. The pressurizing unit 52 pressurizes the region of the upper surface 20a of the composite material 20 contacting the contact section 64a. At the pressurizing unit 52, the area in a direction along the horizontal plane of the pressurization region is approximately the area of the contact section 64a.

Because of the presence of the contact section 64a and the non-contact section 64b, and the presence of the taper from the central region to the outer peripheral region, the composite material forming device 60 and the composite material forming method carried out by the composite material forming device 60 can impart a pressurization gradient by the non-contact section 64b in the vicinity of the pressurization region of the composite material 20 that is contacted and pressurized by the contact section 64a. Through this, the composite material forming device 60 and the composite material forming method carried out by the composite material forming device 60 can use the pressurization gradient imparted by the non-contact section 64b to more suitably remove the gas that is generated inside the thermosetting resin from the central region to the outer peripheral region. Note that in the third embodiment, the first member 64 has a taper from the central region of the surface opposing the composite material 20 to the outer peripheral region, but the second member 24 may also have a similar taper, or both the first member 64 and the second member 24 may have similar tapers.

### Fifth Embodiment

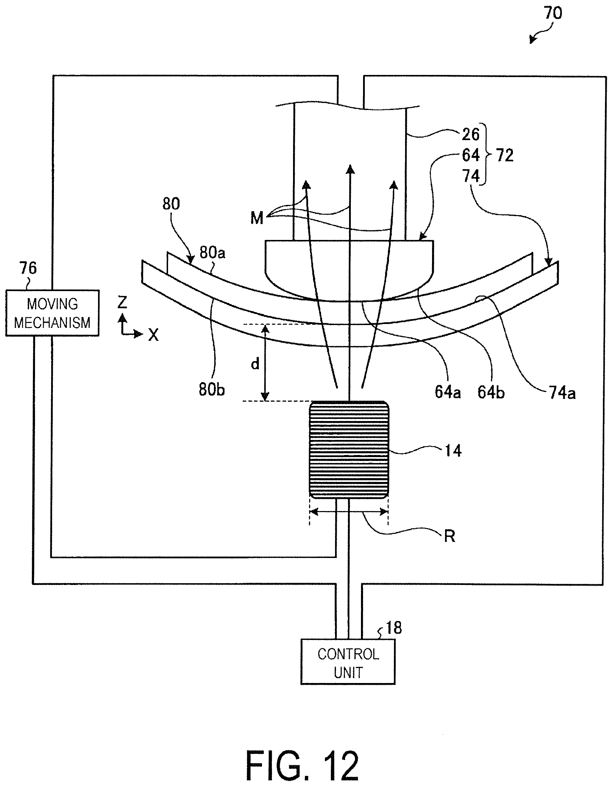

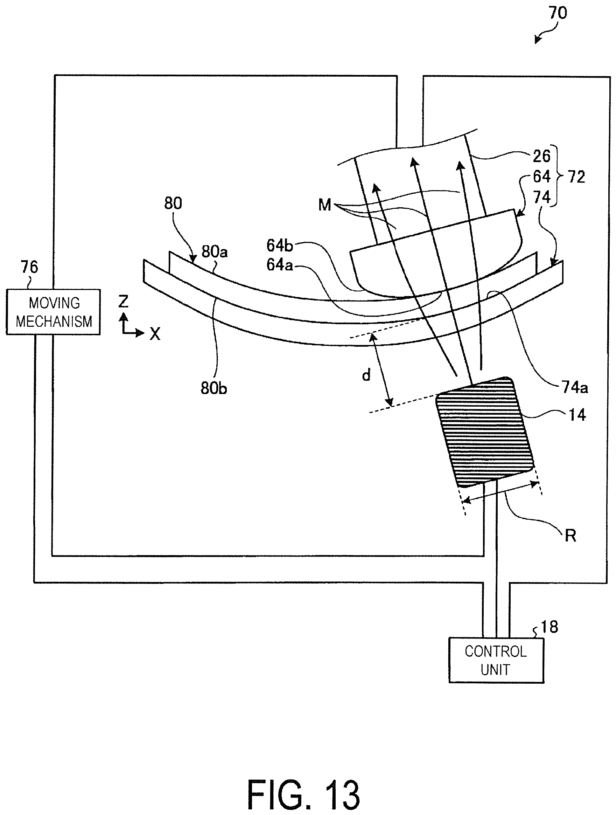

FIG. 12 is a schematic configuration diagram of a composite material forming device 70 according to a fifth embodiment of the present invention. FIG. 13 is a schematic configuration diagram illustrating an example of a case in which the pressurization region and the heating region have been moved in the composite material forming device 70 according to the fifth embodiment of the present invention. The composite material forming device 70 differs from the composite material forming device 10 in that the pressurizing unit 12 is changed to a pressurizing unit 72, and the movement mechanism 16 is changed to a movement mechanism 76. In the composite material forming device 70, the same group of reference signs as that of the first embodiment is used for constituent elements which are the same as those of the first embodiment, and detailed descriptions thereof are omitted.

As illustrated in FIG. 12, the composite material forming device 70 processes the composite material 80, in place of the composite material 20, from a softened state or semi-cured state to a cured state while forming to a predetermined size and a predetermined shape. The composite material 80 has the same configuration and properties as those of the composite material 20, but differs from the composite material 20 in terms of the shape, namely, the composite material 80 has an upper surface 80a that is a concave curved surface in the +Z-direction, and a lower surface 80b that is a convex curved surface in the -Z direction.

The pressurizing unit 72 differs from the pressurizing unit 12 in that the first member 22 is changed to a first member 64, and the second member 24 is changed to a second member 74. The first member 64 of the pressurizing unit 72 is the same as the first member 64 of the pressurizing unit 62, and therefore a detailed description thereof is omitted. The second member 74 is fixed and installed. The second member 74 has a concave curved surface 74a upward in the +Z-direction.

The pressurizing unit 72 pressurizes a predetermined region of the composite material 80. At the contact section 64a, the first member 64 contacts a predetermined region of an upper surface 80a of the composite material 80, and applies pressure to the predetermined region of the composite material 80 in a direction orthogonal to the upper surface 80a of the composite material 80. At the curved surface 74a, the second member 74 contacts the entire surface of the lower surface 80b of the composite material 80, and supports the composite material 80 in each region in a direction that is orthogonal to each region. In this manner, the pressurizing unit 72 sandwiches and pressurizes the predetermined region of the composite material 80 between the contact section 64a of the first member 64 and the curved surface 74a of the second member 74. In the fifth embodiment, the pressurizing unit 72 sandwiches and pressurizes the predetermined region of the composite material 80 between the contact section 64a of the first member 64 and the curved surface 74a of the second member 74, and therefore the composite material 80 is formed in a curved plate shape. The pressurizing unit 72 pressurizes the region of the upper surface 80a of the composite material 80 contacting the contact section 64a. The area of the pressurization region to be pressurized by the pressurizing unit 72 is approximately the area of the contact section 64a.

The movement mechanism 76 is connected to the pressurizing cylinder 26 of the pressurizing unit 72 on the side that is opposite to the side at which the first member 64 is provided. The movement mechanism 76 is also connected to the heating unit 14 on the side that is opposite to the side facing the composite material 80. The movement mechanism 76 is electrically connected to the control unit 18. An example of the movement mechanism 76 is a robot arm, but the present invention is not limited thereto, and a well-known drive device which grips in a manner capable of moving in three dimensions can be applied. As illustrated in FIG. 13, the movement mechanism 76 moves the first member 64 along the upper surface 80a of the composite material 80 through the pressurizing cylinder 26 based on control by the control unit 18. Through this, the movement mechanism 76 changes the position of the first member 64 relative to the composite material 80. By changing the position of the first member 64 relative to the composite material 80, the movement mechanism 76 moves the pressurization region. As illustrated in FIG. 13, the movement mechanism 76 moves the heating unit 14 along the lower surface 80b of the composite material 80 based on control by the control unit 18. Through this, the movement mechanism 76 changes the position of the heating unit 14 relative to the composite material 80. The movement mechanism 76 moves the heating region by changing the position of the heating unit 14 relative to the composite material 80.

Through control by the control unit 18, the movement mechanism 76 synchronously changes the position of the first member 64 relative to the composite material 80, and the position of the heating unit 14 relative to the composite material 80. By synchronizing and changing the position of the first member 64 relative to the composite material 80, and the position of the heating unit 14 relative to the composite material 80, the movement mechanism 76 synchronously moves the pressurization region and the heating region.

The operation of the composite material forming device 70 according to the fifth embodiment having a configuration like that described above is described below. The processing method executed by the composite material forming device 70 differs from the processing method executed by the composite material forming device 10 in that the moving step S18 is partially changed.

In the moving step according to the fifth embodiment, on the basis of control by the control unit 18, the movement mechanism 76 moves the pressurization region by moving the first member 64 along the upper surface 80a of the composite material 80. The movement mechanism 76 moves the heating unit 14 along the lower surface 80b of the composite material 80 based on control by the control unit 18, and thereby moves the heating region. On all other points, the moving step according to the fifth embodiment is the same as the moving step S18 according to the first embodiment.

As described above, even for a case in which the composite material 80 is formed having a concave curved upper surface 80a and a convex curved lower surface 80b, the composite material forming device 70 and the composite material forming method carried out by the composite material forming device 70 can synchronously move the pressurization region and the heating region by the movement mechanism 76 according to the shape of the composite material 80. Therefore, the composite material forming device 70 and the composite material forming method carried out by the composite material forming device 70 can suitably remove the gas that is generated inside the thermosetting resin by pressurization, and can efficiently form the composite material 80 in a state in which gas is removed by heating, according to the size and shape of the composite material 80.

The composite material forming device 70 and the composite material forming method carried out by the composite material forming device 70 can also form a composite material having a shape which is more complex than that of the composite material 80 by changing the shapes of the first member 64 and the second member 74.

Note that the composite material forming device 70 and the composite material forming method carried out by the composite material forming device 70 use the movement mechanism 76 to synchronously move the first member 64 and the heating unit 14 with respect to the composite material 80, but the present invention is not limited thereto. The composite material forming device 70 and the composite material forming method carried out by the composite material forming device 70 may also synchronously move the composite material 80 and the second member 74 with respect to the first member 64 and the heating unit 14.

### Reference Signs List

- 10, 30, 50, 60, 70:: Composite material forming device
- 12, 32, 52, 62, 72:: Pressurizing unit
- 14:: Heating unit
- 16, 36, 76:: Movement mechanism
- 18:: Control unit
- 20, 40, 80:: Composite material
- 20a, 40a, 80a:: Upper surface
- 20b, 40b, 80b:: Lower surface
- 22, 54, 64:: First member
- 22a, 24a, 34a:: Plane
- 24, 34, 74:: Second member
- 26:: Hydraulic cylinder
- 28a, 28b:: Movement path
- 40e:: End portion
- 54a:: Flat section
- 54b:: Taper
- 64a:: Contact section
- 64b:: Non-contact section
- 74a:: Curved surface
- d:: Distance
- H:: Heating center region
- M:: Magnetic force lines
- R:: Diameter
- t_{f}:: Heating end time
- tₛ:: Heating start time

## Claims

1. A composite material forming device (10;30;50;60;70) comprising:
a pressurizing unit (12;32;52;62;72) including a first member (22;54;64) and a second member (24;34;74) which are transparent with respect to a magnetic field, and configured to sandwich and pressurize, between the first member (22;54;64) and the second member (24;34;74), a predetermined region of a composite material (20;40;80) in which reinforcing fibers have been impregnated with a thermosetting resin;
a heating unit (14) configured to apply a magnetic field to the predetermined region of the composite material (20;40;80) that has been pressurized by the pressurizing unit (12;32;52;62;72), and heat the predetermined region of the composite material (20;40;80); and
a movement mechanism (16;36;76) configured to synchronize and move with respect to the composition material (20;40;80) a pressurization region to be pressurized by the pressurizing unit (12;32;52;62;72) and a heating region to be heated by the heating unit (14), synchronizing and moving a position of the first member (22;54;64) or the second member (24;34;74) relative to the composite material (20;40;80), and a position of the heating unit (14) relative to the composite material (20;40;80),
wherein the movement mechanism (16;36;76) is configured to move the pressurization region and the heating region in a spiral shape from a central region of the composite material (20;40;80) towards an outer peripheral region such that a gap is not produced in the heating region.

2. The composite material forming device (10;50;60;70) according to claim 1, wherein the movement mechanism (16;76) is configured to move the first member (22;54;64) or the second member (24;74), and the heating unit (14) with respect to the composite material (20;80).

3. The composite material forming device (30) according to claim 1, wherein the movement mechanism (36) is configured to move the composite material (40) with respect to the first member (22) or the second member (34), and the heating unit (14).

4. The composite material forming device (10;30;50;60;70) according to any one of claims 1 to 3, wherein the first member (22;54;64) or the second member (24;34;74) has a taper (54b) from a central region of a surface facing the composite material (20;40;80) to an outer peripheral region.

5. The composite material forming device (10;30;50;60;70) according to any one of claims 1 to 4, wherein the heating unit (14) is configured to apply a high frequency magnetic field of 900 kHz or higher.

6. The composite material forming device (10;30;50;60;70) according to any one of claims 1 to 5, wherein the first member (22;54;64) and the second member (24;34;74) comprise at least one of a polyether ether ketone resin and a ceramic.

7. A composite material forming method comprising:
a pressurizing step (S12) of sandwiching and pressurizing, between a first member (22;54;64) and a second member (24;34;74) which are transparent with respect to a magnetic field, a predetermined region of a composite material (20;40;80) in which reinforcing fibers have been impregnated with a thermosetting resin;
a heating step (S14) of applying a magnetic field to the predetermined region of the composite material (20;40;80) that has been pressurized in the pressurizing step (S12), and heating the predetermined region of the composite material (20;40;80); and
a moving step (S18) of synchronously moving a pressurization region to be pressurized in the pressurizing step (S12) and a heating region to be heated in the heating step (S14) with respect to the composite material (20;40;80),
wherein, in the moving step (S18), the pressurization region and the heating region are moved in a spiral shape from a central region of the composite material (20;40;80) towards an outer peripheral region such that a gap is not produced in the heating region.

8. The composite material forming method according to claim 7, wherein in the moving step (S18), the first member (22;54;64) or the second member (24;74), and a heating unit (14) that applies a magnetic field to the composite material (20;80) are moved with respect to the composite material (20;80).

9. The composite material forming method according to claim 8, wherein in the moving step (S18), the composite material (40) is moved with respect to the first member (22) or the second member (34), and a heating unit (14) that applies a magnetic field to the composite material (40).

10. The composite material forming method according to any one of claims 7 to 9, wherein the first member (22;54;64) or the second member (24;34;74) has a taper (54b) from a central region of a surface facing the composite material (20;40;80) to an outer peripheral region.

11. The composite material forming method according to any one of claims 7 to 10, wherein in the heating step (S14), a high frequency magnetic field of 900 kHz or higher is applied to the predetermined region of the composite material (20;40;80).

12. The composite material forming method according to any one of claims 7 to 11, wherein the first member (22;54;64) and the second member (24;34;74) comprise at least one of a polyether ether ketone resin and a ceramic.

## Patentansprüche

1. Eine Verbundmaterial-Formungsvorrichtung (10;30;50;60;70) mit:
einer Druckbeaufschlagungseinheit (12;32;52;62;72) mit einem ersten Element (22;54;64) und einem zweiten Element (24;34;74), die bezüglich einem Magnetfeld durchlässig sind und die konfiguriert sind, um zwischen dem ersten Element 22;54;64) und dem zweiten Element (24;34;74) einen vorbestimmten Bereich eines Verbundmaterials (20;40;80), in dem Verstärkungsfasern mit einem wärmehärtenden Harz imprägniert wurden, einzufügen und mit Druck zu beaufschlagen,
einer Heizeinheit (14), die konfiguriert ist, um ein Magnetfeld auf einem vorbestimmten Bereich des Verbundmaterials (20;40;80), das durch die Druckbeaufschlagungseinheit (12;32;52;62;72) mit Druck beaufschlagt wurde, auszuüben, und den vorbestimmten Bereich des Verbundmaterials (20;40;80) zu erwärmen, und
einem Bewegungsmechanismus (16;36;76), der konfiguriert ist, um bezüglich dem Verbundmaterial (20;40;80) einen Druckbeaufschlagungsbereich, der durch die Druckbeaufschlagungseinheit (12;32;52;62;72) mit Druck zu beaufschlagen ist, und einen Heizbereich, der durch die Heizeinheit (14) zu erwärmen ist, zu synchronisieren und zu bewegen, indem er eine Position des ersten Elements (22;54;64) oder des zweiten Elements (24;34;74) relativ zu dem Verbundmaterial (20;40;80), und eine Position der Heizeinheit (14) relativ zu dem Verbundmaterial (20;40;80) synchronisiert und bewegt,
wobei der Bewegungsmechanismus (16;36;76) konfiguriert ist, um den Druckbeaufschlagungsbereich und den Heizbereich in einer Spiralform von einem zentralen Bereich des Verbundmaterials (20;40;80) zu einem Außenumfangsbereich so zu bewegen, dass ein Zwischenraum in dem Heizbereich nicht gebildet wird.

2. Die Verbundmaterial-Formungsvorrichtung (10;50;60;70) gemäß Anspruch 1, wobei der Bewegungsmechanismus (16;76) konfiguriert ist, um das erste Element (22;54;64) oder das zweite Element (24;74) und die Heizeinheit (14) bezüglich dem Verbundmaterial (20;80) zu bewegen.

3. Die Verbundmaterial-Formungsvorrichtung (30) gemäß Anspruch 1, wobei der Bewegungsmechanismus (36) konfiguriert ist, um das Verbundmaterial (40) bezüglich dem ersten Element (22) oder dem zweiten Element (34) und der Heizeinheit (14) zu bewegen.

4. Die Verbundmaterial-Formungsvorrichtung (10;30;50;60;70) gemäß einem der Ansprüche 1 bis 3, wobei das erste Element (22;54;64) oder das zweite Element (24;34;74) eine Abschrägung (54b) von einem zentralen Bereich einer dem Verbundmaterial (20;40;80) zugewandten Oberfläche zu einem Außenumfangsbereich besitzt.

5. Die Verbundmaterial-Formungsvorrichtung (10;30;50;60;70) gemäß einem der Ansprüche 1 bis 4, wobei die Heizeinheit (14) konfiguriert ist, um ein Hochfrequenzmagnetfeld von 900kHz oder höher anzuwenden.

6. Die Verbundmaterial-Formungsvorrichtung (10;30;50;60;70) gemäß einem der Ansprüche 1 bis 5, wobei das erste Element (22;54;64) und das zweite Element (24;34;74) zumindest eines von einem Polyetheretherketonharz und einer Keramik aufweisen.

7. Ein Verbundmaterial-Formungsverfahren mit:
einem Druckbeaufschlagungsschritt (S12) des Einfügens und Druckbeaufschlagens, zwischen einem ersten Element (22;54;64) und einem zweiten Element (24;34;74), die bezüglich einem Magnetfeld durchlässig sind, eines vorbestimmten Bereichs eines Verbundmaterials (20;40;80), in dem Verstärkungsfasern mit einem wärmehärtenden Harz imprägniert wurden,
einem Heizschritt (S14) des Anwendens eines Magnetfelds auf den vorbestimmten Bereich des Verbundmaterials (20;40;80), das in dem Druckbeaufschlagungsschritt (S12) mit Druck beaufschlagt wurde, und des Erwärmens des vorbestimmten Bereichs des Verbundmaterials (20;40;80), und
einem Bewegungsschritt (S18) des synchronen Bewegens eines Druckbeaufschlagungsbereichs, der in dem Druckbeaufschlagungsschritt (S12) mit Druck zu beaufschlagen ist, und eines Heizbereichs, der in dem Heizschritt (S14) zu erwärmen ist, bezüglich dem Verbundmaterial (20;40;80),
wobei, in dem Bewegungsschritt (S18), der Druckbeaufschlagungsbereich und der Heizbereich in einer Spiralform von einem Mittelbereich des Verbundmaterials (20;40;80) zu einem Außenumfangsbereich so bewegt werden, dass ein Zwischenraum in dem Heizbereich nicht gebildet wird.

8. Das Verbundmaterial-Formungsverfahren gemäß Anspruch 7, wobei in dem Bewegungsschritt (S18) das erste Element (22;54;64) oder das zweite Element (24;74) und eine Heizeinheit (14), die ein Magnetfeld auf das Verbundmaterial (20;80) ausübt, bezüglich dem Verbundmaterial (20;80) bewegt werden.

9. Das Verbundmaterial-Formungsverfahren gemäß Anspruch 8, wobei in dem Bewegungsschritt (S18) das Verbundmaterial (40) bezüglich dem ersten Element (22) oder dem zweiten Element (34) und einer Heizeinheit (14), die ein Magnetfeld auf das Verbundmaterial (40) ausübt, bewegt wird.

10. Das Verbundmaterial-Formungsverfahren gemäß einem der Ansprüche 7 bis 9, wobei das erste Element (22;54;64) oder das zweite Element (24;34;74) eine Abschrägung (54b) von einem Mittelbereich einer dem Verbundmaterial (20;40;80) zugewandten Oberfläche zu einem Außenumfangsbereich besitzt.

11. Das Verbundmaterial-Formungsverfahren gemäß einem der Ansprüche 7 bis 10, wobei in dem Heizschritt (S14) ein Hochfrequenzmagnetfeld von 900kHz oder höher auf den vorbestimmten Bereich des Verbundmaterials (20;40;80) ausgeübt wird.

12. Das Verbundmaterial-Formungsverfahren gemäß einem der Ansprüche 7 bis 11, wobei das erste Element (22;54;64) und das zweite Element (24;34;74) zumindest eines von einem Polyetheretherketonharz und einer Keramik aufweisen.

## Revendications

1. Dispositif (10 ; 30 ; 50 ; 60 ; 70) de formage de matériau composite, comprenant :
une unité (12 ; 32 ; 52 ; 62 ; 72) de mise en pression, ayant un premier élément (22 ; 54 ; 64) et un deuxième élément (24 ; 34 ; 74), qui sont transparents par rapport à un champ magnétique et configurés pour prendre en sandwich et mettre en pression, entre le premier élément (22 ; 54 ; 64) et le deuxième élément (24 ; 34 ; 74), une région déterminée à l'avance d'un matériau (20 ; 40 ; 80) composite, dans lequel des fibres de renfort ont été imprégnées d'une résine thermodurcissable ;
une unité (14) de chauffage, configurée pour appliquer un champ magnétique à la région déterminée à l'avance du matériau (20 ; 40 ; 80) composite, qui a été mise en pression par l'unité (12 ; 32 ; 52 ; 62 ; 72) de mise en pression, et chauffer la région déterminée à l'avance du matériau (20 ; 40 ; 80) composite ; et
un mécanisme (16 ; 36 ; 76) de déplacement, configuré pour synchroniser et déplacer, par rapport au matériau (20 ; 40 ; 80) composite, une région de mise en pression à mettre en pression par l'unité (12 ; 32 ; 52 ; 62 ; 72) de mise en pression et une région de chauffage à chauffer par l'unité (14) de chauffage, en synchronisant et en déplaçant une position du premier élément (22 ; 54 ; 64) ou du deuxième élément (24 ; 34 ; 74) par rapport au matériau (20 ; 40 ; 80) composite et une position de l'unité (14) de chauffage par rapport au matériau (20 ; 40 ; 80) composite,
dans lequel le mécanisme (16 ; 36 ; 76) de déplacement est configuré pour déplacer la région de mise en pression et la région de chauffage suivant une forme en spirale d'une région centrale du matériau (20 ; 40 ; 80) composite vers une région périphérique extérieure, de manière à ne pas produire un intervalle dans la région de chauffage.

2. Dispositif (10 ; 50 ; 60 ; 70) de formage de matériau composite suivant la revendication 1, dans lequel le mécanisme (16 ; 76) de déplacement est configuré pour déplacer le premier élément (22 ; 54 ; 64) ou le deuxième élément (24 ; 74) et le dispositif (14) de chauffage par rapport au matériau (20 ; 80) composite.

3. Dispositif (30) de formage de matériau composite suivant la revendication 1, dans lequel le mécanisme (36) de déplacement est configuré pour déplacer le matériau (40) composite par rapport au premier élément (22) ou au deuxième élément (34) et l'unité (14) de chauffage.

4. Dispositif (10 ; 30 ; 50 ; 60 ; 70) de formage de matériau composite suivant l'une quelconque des revendications 1 à 3, dans lequel le premier élément (22 ; 54 ; 64) ou le deuxième élément (24 ; 34 ; 74) a une conicité (54b) d'une région centrale d'une surface faisant face au matériau (20 ; 40 ; 80) composite à une région périphérique extérieure.

5. Dispositif (10 ; 30 ; 50 ; 60 ; 70) de formage de matériau composite suivant l'une quelconque des revendications 1 à 4, dans lequel l'unité (14) de chauffage est configurée pour appliquer un champ magnétique de haute fréquence supérieur ou égal à 900 kHz.

6. Dispositif (10 ; 30 ; 50 ; 60 ; 70) de formage de matériau composite suivant l'une quelconque des revendications 1 à 5, dans lequel le premier élément (22 ; 54 ; 64) et le deuxième élément (24 ; 34 ; 74) comprennent au moins l'une d'une résine de polyéther éther cétone et d'une céramique.

7. Procédé de formage de matériau composite comprenant :
un stade (S12) de mise en pression, dans lequel on prend en sandwich et on met en pression, entre un premier élément (22 ; 54 ; 64) et un deuxième élément (24 ; 34 ; 74), qui sont transparents par rapport à un champ magnétique, une région déterminée à l'avance d'un matériau (20 ; 40 ; 80) composite, dans lequel des fibres de renfort ont été imprégnées d'une résine thermodurcissable ;
un stade (S14) de chauffage, dans lequel on applique un champ magnétique à la région déterminée à l'avance du matériau (20 ; 40 ; 80) composite, qui a été mise en pression dans le stade (S12) de mise en pression, et on chauffe la région déterminée à l'avance du matériau (20 ; 40 ; 80) composite ; et
un stade (S18) de déplacement, dans lequel on déplace en synchronisme une région de mise en pression à mettre en pression dans le stade (S12) de mise en pression et la région de chauffage à chauffer dans le stade (S14) de chauffage, par rapport au matériau (20 ; 40 ; 80) composite,
dans lequel, dans le stade (S18) de déplacement, on déplace la région de mise en pression et la région de chauffage suivant une forme en spirale d'une région centrale du matériau (20 ; 40 ; 80) composite vers une région périphérique extérieure, de manière à ne pas produire un intervalle dans la région de chauffage.

8. Procédé de formage de matériau composite suivant la revendication 7, dans lequel, dans le stade (S18) de déplacement, on déplace, par rapport au matériau (20 ; 80) composite, le premier élément (22 ; 54 ; 64) ou le deuxième élément (24 ; 74) et une unité (14) de chauffage, qui applique un champ magnétique au matériau (20 ; 80) composite.

9. Procédé de formage de matériau composite suivant la revendication 8, dans lequel, dans le stade (S18) de chauffage, on déplace le matériau (40) composite, par rapport au premier élément (22) ou au deuxième élément (34), et une unité (14) de chauffage, qui applique un champ magnétique au matériau (40) composite.

10. Procédé de formage de matériau composite suivant l'une quelconque des revendications 7 à 9, dans lequel le premier élément (22 ; 54 ; 64) ou le deuxième élément (24 ; 34 ; 74) a une conicité (54b) d'une région centrale d'une surface faisant face au matériau (20 ; 40 ; 80) composite à une région périphérique extérieure.

11. Procédé de formage de matériau composite suivant l'une quelconque des revendications 7 à 10, dans lequel, dans le stade (S14) de chauffage, on applique un champ magnétique de haute fréquence supérieur ou égal à 900 kHz à la région déterminée à l'avance du matériau (20 ; 40 ; 80) composite.

12. Procédé de formage de matériau composite suivant l'une quelconque des revendications 7 à 11, dans lequel le premier élément (22 ; 54 ; 64) et le deuxième élément (24 ; 34 ; 74) comprennent au moins l'une d'une résine de polyéther éther cétone et d'une céramique.
